# EUROPÄISCHE PATENTSCHRIFT

(11) **EP 3 186 031 B1**
(45) Veröffentlichungstag und Bekanntmachung des Hinweises auf die Patenterteilung: **31.07.2019**
(21) Anmeldenummer: 15750721.1
(22) Anmeldetag: 12.08.2015
(51) Int. Cl.: B23K 26/38, B23K 26/03, B23K 26/04, B23K 26/08, B23K 26/10, B23K 26/382

(54) **VERFAHREN ZUM EINSTECHEN IN METALLISCHE WERKSTÜCKE MITTELS EINES LASERSTRAHLS SOWIE ZUGEHÖRIGE LASERBEARBEITUNGSMASCHINE UND COMPUTERPROGRAMMPRODUKT**
METHOD FOR PUNCTURING METAL WORKPIECES BY MEANS OF A LASER BEAM AND ASSOCIATED LASER MACHINING MACHINE AND COMPUTER PROGRAM PRODUCT
PROCÉDÉ DE SAIGNAGE DANS DES PIÈCES MÉTALLIQUES AU MOYEN D'UN FAISCEAU LASER AINSI QUE MACHINE D'USINAGE À LASER ET PRODUIT DE PROGRAMME INFORMATIQUE ASSOCIÉS

(30) Priorität: 28.08.2014 DE 102014217154
(43) Veröffentlichungstag der Anmeldung: 05.07.2017
(73) Patentinhaber: TRUMPF Werkzeugmaschinen GmbH + Co. KG, 71254 Ditzingen (DE)
(72) Erfinder: SPIESS, Martin, 70839 Gerlingen (DE); HALLASCH, Dieter, 71254 Ditzingen (DE); KNORRECK, Daniel, 71394 Kernen im Remstal (DE); BLASCHKA, Markus, 71101 Schönaich (DE)
(74) Vertreter: Kohler Schmid Möbus Patentanwälte
(86) Internationale Anmeldenummer: PCT/EP2015/068600
(87) Internationale Veröffentlichungsnummer: WO 2016/030199

(56) Entgegenhaltungen:
- DE-B3-102013 210 857
- JP-A- 2009 190 064
- JP-B2- 3 115 060
- JP-B2- 3 131 357

## Beschreibung

Die Erfindung betrifft ein Verfahren zum Einstechen in ein metallisches Werkstück an einer Einstichstelle mittels eines Laserstrahls und eines Prozessgases, die beide aus einer Laserbearbeitungsdüse austreten, wobei beim Einstechen um die Einstichstelle herum ein Aufwurf auf der Werkstückoberfläche abgelagert wird, sowie eine zum Durchführen dieses Einstechverfahrens geeignete Laserbearbeitungsmaschine und ein Computerprogrammprodukt.

Beim Einstechen in metallische Werkstücke mittels eines Laserstrahls muss, insbesondere bei Verwendung von Sauerstoff als Prozessgas, der Abstand der Laserbearbeitungsdüse zum Werkstück so eingestellt sein, dass das Prozessgas optimal in den Prozesspunkt eingeleitet wird. Beim Einstechen in dicke Bleche (Blechdicke ≥ 5 mm) entstehen Aufwürfe aus geschmolzenem und wieder erstarrendem Metall oder Metalloxid in der Umgebung des Einstichlochs, deren Ausmaße mit größer werdender Blechstärke deutlich zunehmen. Eine Besonderheit ist hierbei ein säulenförmiges Anwachsen des Aufwurfs (auch als "Hütchen" bezeichnet) um die Einstichstelle herum. Dieser Umstand hat zur Folge, dass sich die Prozessgaseinkopplung mit dem anwachsenden Aufwurf verändert und somit der Einstechprozess nicht optimal geführt werden kann. In der Praxis wird daher beim Dickblecheinstechen ein konstanter Einstechabstand der Laserbearbeitungsdüse zum Blech eingestellt, der so gewählt ist, dass sich ein bestmöglicher Kompromiss zwischen "noch geduldetem Aufwurfwachstum" und "noch guter Prozessgaseinkopplung" ergibt. Dieser konstante Einstechabstand muss stets so groß gewählt sein, dass der Aufwurf nicht bis an die Laserbearbeitungsdüse wächst und dort Beschädigungen hervorruft.

Aus der WO 2013/007674 A1 ist ein Schneidverfahren bekannt, bei dem während des Schneidvorgangs aus den Signalen der Abstandsregelung die Oberflächentopographie des Werkstücks bestimmt wird.

Aus JP 03000490 A oder JPH 04052094 A ist es bekannt, die Abstandsregelung beim Einstechen auszuschalten und beim anschließenden Schneiden erst nach einem bestimmten Verfahrweg des Laserbearbeitungskopfes wieder einzuschalten. Beim Einstechen wird der Laserbearbeitungskopf samt seiner Laserbearbeitungsdüse konstant auf einem größeren Abstand zum Werkstück positioniert als beim anschließenden Schneiden.

Aus der noch nicht veröffentlichten DE 10 2013 210 845.1 ist weiterhin ein Verfahren zum Einstechen in ein metallisches Werkstück mittels eines Laserstrahls und eines Prozessgases bekannt, bei dem in einem ersten Schritt mittels des Laserstrahls und des Prozessgases ein Einstichloch durch das Werkstück durchgestochen wird. In einem zweiten Schritt wird mittels des nun auf einen größeren Fokusdurchmesser eingestellten Laserstrahls ein im ersten Schritt um das Einstichloch herum auf der Werkstückoberfläche abgelagerter Aufwurf aufgeschmolzen und dabei möglichst in eine flachere Form umgeformt oder zumindest teilweise entfernt.

Aus der JP 3 115060 B2 ist ein Verfahren gemäß dem Oberbegriff des Anspruchs 1 und eine Vorrichtung gemäß dem Oberbegriff des Anspruchs 6 bekannt.

Der vorliegenden Erfindung stellt sich die Aufgabe, ein Verfahren der eingangs genannten Art dahingehend zu verbessern, dass das Prozessgas trotz des anwachsenden Aufwurfs optimal in die Einstichstelle eingekoppelt werden kann, ohne die Laserbearbeitungsdüse durch den anwachsenden Aufwurf zu beschädigen. Diese Aufgabe wird erfindungsgemäß dadurch gelöst, dass während des Einstechens der Abstand der Laserbearbeitungsdüse zum Aufwurf kontinuierlich gemessen wird und dass mindestens ein Einstechparameter in Abhängigkeit des gemessenen Abstands geändert wird, wodurch insbesondere durch Ändern des Abstands der Laserbearbeitungsdüse zur Werkstückoberfläche der Abstand der Laserbearbeitungsdüse zum Aufwurf auf einen vorgegebenen Sollabstand geregelt werden kann.

Erfindungsgemäß wird das Anwachsen eines Aufwurfs an der Einstichstelle mit Hilfe einer Abstandssensorik detektiert, und dann werden einer oder mehrere Einstechparameter in Abhängigkeit des gemessenen Abstands geändert. Die Messung des Abstands zwischen der Laserbearbeitungsdüse zum Aufwurf (bzw. zur Aufwurfoberseite) kann beispielsweise durch eine bekannte, üblicherweise am Bearbeitungskopf der Laserbearbeitungsmaschine angeordnete kapazitive Abstandssensorik erfolgen. Alternativ kann der Abstand auch induktiv oder optisch, d.h. über Lichtschnittsensorik oder mit Hilfe einer Kamera, gemessen werden.

Vorzugsweise handelt es sich bei dem geänderten Einstechparameter um die Höhenposition (z-Position) der Laserbearbeitungsdüse in der Laserbearbeitungsmaschine bzw. um den Abstand der Laserbearbeitungsdüse zur eigentlichen Werkstückoberfläche. Beim Anwachsen des Aufwurfs wird der Abstand der Laserbearbeitungsdüse zur Werkstückoberfläche vergrößert und dadurch der Abstand der Laserbearbeitungsdüse zum Aufwurf auf einen vorgegebenen (z.B. konstanten) Sollabstand geregelt. Die Position der Laserbearbeitungsdüse (bzw. des Laserbearbeitungskopfs) wird also entsprechend der Höhe des Aufwurfs in Richtung der z-Achse nachjustiert. Durch die Nachjustierung wird der Prozess aufwurfabhängig optimal geführt und die nötige Prozesszeit maßgeblich optimiert.

Die Auswertung der Abstandsdaten der Abstandssensorik ermöglicht beim Einstechen Rückschlüsse über das Anwachsen und die Höhe des Aufwurfs. Mit diesen Informationen kann dann nachgelagert eine Regelung realisiert werden, welche während des Prozessverlaufs kontinuierlich oder schrittweise einen optimalen Abstand der Laserbearbeitungsdüse relativ zum Aufwurf (d.h. relativ zur Aufwurfoberseite) einstellt. Die Regelung des Abstands der Laserbearbeitungsdüse zum Aufwurf auf einen vorgegebenen, insbesondere konstanten, Sollabstand ermöglicht gegenüber bekannten Lösungen, bei denen der Abstand der Laserbearbeitungsdüse zur Werkstückoberfläche fest eingestellt wird, eine deutlich verbesserte Einkopplung des Prozessgases in die Einstichstelle. Der Sollabstand der Laserbearbeitungsdüse zum Aufwurf kann einen konstanten Wert aufweisen. Alternativ kann sich der Sollabstand im Verlauf des Prozesses ändern. So kann beispielsweise der Abstand der Laserbearbeitungsdüse zur Aufwurfoberseite gegen Ende des Einstichprozesses geringer werden, um einen Grenzwert für den Abstand zwischen der Laserbearbeitungsdüse und der Werkstückoberfläche nicht zu überschreiten.

Vorzugsweise wird während des Einstechens mindestens einer der folgenden Einstechparameter in Abhängigkeit von dem gemessenen Abstand - einmalig, kontinuierlich oder schrittweise - geändert: Abstand der Laserbearbeitungsdüse zur Werkstückoberfläche, Abstand der Laserbearbeitungsdüse zum Aufwurf, Fokuslage des Laserstrahls zum Werkstück, Fokusdurchmesser des Laserstrahls, Leistung des Laserstrahls, Gasdruck des aus der Laserbearbeitungsdüse austretenden Prozessgases und Gasart des aus der Laserbearbeitungsdüse austretenden Prozessgases. Mit der Abstandssensorik wird der Abstand der Laserbearbeitungsdüse zum Aufwurf (bzw. zur Aufwurfoberseite) gemessen, aber die Reaktion darauf kann sowohl über eine Abstandsänderung als auch (zusätzlich oder alternativ) über andere Stellgrößen (Fokuslage, Fokusdurchmesser, Leistung, Tastfrequenz, Gasdruck, Gasart (z.B. Wechsel von anfänglich Sauerstoff zu Stickstoff), ..., erfolgen.

In einer Weiterbildung des erfindungsgemäßen Verfahrens werden während des Einstechens der Abstand der Laserbearbeitungsdüse zur eigentlichen Werkstückoberfläche und/oder die Höhe des Aufwurfes statt aus dem Sensorsignal der Abstandsregelungsvorrichtung aus dem Verfahrweg der Laserbearbeitungsdüse rechtwinklig zur Werkstückoberfläche ermittelt. In Abhängigkeit von dem ermittelten Abstand der Laserbearbeitungsdüse zur Werkstückoberfläche oder von der ermittelten Höhe des Aufwurfes kann dann vorteilhafterweise während des Einstechens mindestens eine der oben genannten weiteren Stellgrößen - einmalig, kontinuierlich oder schrittweise -geändert werden.

Mit zunehmendem Abstand der Laserbearbeitungsdüse zur eigentlichen Werkstückoberfläche kann beispielsweise
- die Fokuslage nach unten hin verschoben werden, um die Fokuslage relativ zur Werkstückoberfläche konstant zu halten oder gewollt zu verändern;
- der Fokusdurchmesser geändert werden, um den Fokusdurchmesser am Werkstück konstant zu halten oder gewollt zu verändern;
- der Gasdruck erhöht werden, um den Gasdruck am Werkstück konstant zu halten oder gewollt zu verändern;
- die Leistung des Laserstrahls erhöht werden, um die Leistung am Werkstück konstant zu halten oder gewollt zu verändern;
- das Prozessgas z.B. von anfänglich Sauerstoff auf ein Inertgas geändert werden.

Das erfindungsgemäße Verfahren kann sowohl an einer Festkörperlaser-Schneidmaschine als auch an einer Laserschneidmaschine mit CO₂-Laser umgesetzt werden und ist besonders beim Einstechen in dicke Bleche mit einer Blechstärke von mindestens 10 mm vorteilhaft.

Die Erfindung betrifft in einem weiteren Aspekt auch eine Laserbearbeitungsmaschine umfassend einen Laserstrahlerzeuger zum Erzeugen eines Laserstrahls, einen bewegbaren Laserbearbeitungskopf mit einer Laserbearbeitungsdüse, aus der der Laserstrahl zusammen mit einem Prozessgas austritt, eine am Laserbearbeitungskopf angeordnete Abstandssensorik zum Messen des Abstands der Laserbearbeitungsdüse zu einem Werkstück, eine Maschinensteuerung zum Bewegen des Laserbearbeitungskopfes, und eine Regelungseinrichtung, die programmiert ist, während des Einstechens in ein metallisches Werkstück mittels des Laserstrahls mindestens einen Einstechparameter in Abhängigkeit des gemessenen Abstands der Laserbearbeitungsdüse zu einem Aufwurf, welcher beim Einstechen um eine Einstichstelle herum auf der Werkstückoberfläche abgelagert wird, zu ändern, insbesondere den Abstand der Laserbearbeitungsdüse zu dem Aufwurf durch Änderung der Höhenposition des Laserbearbeitungskopfs in der Laserbearbeitungsmaschine auf einen vorgegebenen Sollabstand zu regeln.

Die Erfindung betrifft weiterhin auch ein Computerprogrammprodukt, welches Codemittel aufweist, die zum Durchführen aller Schritte des erfindungsgemäßen Einstechverfahrens angepasst sind, wenn das Programm auf einer Steuerung einer Laserbearbeitungsmaschine abläuft.

Weitere Vorteile und vorteilhafte Ausgestaltungen des Gegenstands der Erfindung sind der Beschreibung, der Zeichnung und den Ansprüchen entnehmbar. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine zum Durchführen des erfindungsgemäßen Einstechverfahrens geeignete Laserschneidmaschine;
- Fign. 2a-2d: den zeitlichen Fortgang beim erfindungsgemäßen Einstechverfahren; und
- Fig. 3: den zeitlichen Verlauf des sich ändernden Messwerts einer kapazitiven Abstandssensorik während eines Einstechvorgangs mit feststehendem Laserbearbeitungskopf.

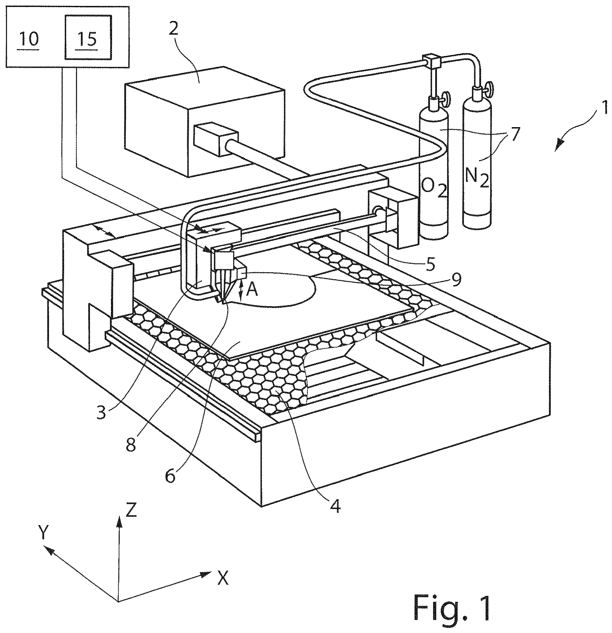

In Fig. 1 ist perspektivisch eine als Laserschneidmaschine ausgeführte Laserbearbeitungsmaschine 1 dargestellt. Weitere Ausführungsbeispiele sind zum Beispiel eine Laserschweißmaschine oder eine kombinierte Stanz-/Laserschneidmaschine. Die Laserbearbeitungsmaschine 1 weist beispielsweise einen CO₂-Laser, Diodenlaser oder Festkörperlaser als Laserstrahlerzeuger 2, einen in X-, Y-, Z-Richtung verfahrbaren Laserbearbeitungskopf 3 und eine Werkstückauflage 4 auf. Im Laserstrahlerzeuger 2 wird ein Laserstrahl 5 erzeugt, der mittels eines (nicht gezeigten) Lichtleitkabels oder (nicht gezeigten) Umlenkspiegeln vom Laserstrahlerzeuger 2 zum Laserbearbeitungskopf 3 geführt wird. Der Laserstrahl 5 wird mittels einer im Laserbearbeitungskopf 3 angeordneten Fokussieroptik auf ein Werkstück 6 gerichtet, das auf der Werkstückauflage 4 angeordnet ist. Die Laserbearbeitungsmaschine 1 wird darüber hinaus mit Prozessgasen 7, beispielsweise Sauerstoff und Stickstoff, versorgt. Es können alternativ oder zusätzlich auch Druckluft oder anwendungsspezifische Gase vorgesehen sein. Die Verwendung der einzelnen Gase ist von dem Material des zu bearbeitenden Werkstücks 6 und von Qualitätsanforderungen an die Schnittkanten abhängig. Das Prozessgas 7 wird einer Laserbearbeitungsdüse 8 des Laserbearbeitungskopfes 3 zugeführt, aus der es zusammen mit dem Laserstrahl 5 austritt.

In den Laserbearbeitungskopf 3 ist eine Abstandssensorik 9 zur kapazitiven Messung des Abstands A zwischen der Laserbearbeitungsdüse 8 und dem Werkstück 6 integriert. Die Abstandsmessung kann alternativ auch induktiv oder optisch erfolgen.

Die Laserbearbeitungsmaschine 1 umfasst weiterhin eine Maschinensteuerung 10 zum Verfahren des Laserbearbeitungskopfes 3 samt Laserbearbeitungsdüse 8 in X-, Y- und Z-Richtung.

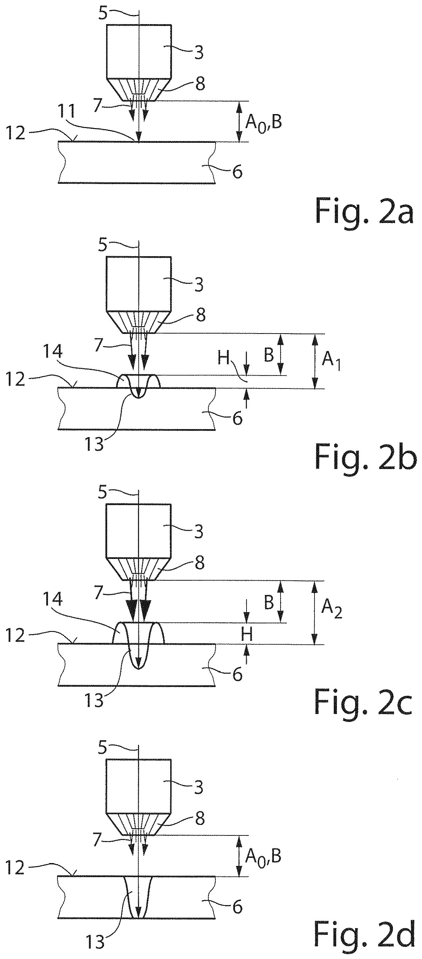

In Fign. 2a bis 2d ist der zeitlichen Fortgang beim erfindungsgemäßen Einstechen in ein Werkstück 6 gezeigt. Bei dem Werkstück 6 kann es sich beispielsweise um ein Blech aus Stahl mit einer Blechstärke von mindestens 10 mm handeln.

Fig. 2a zeigt den Beginn (Zeitpunkt t0) des Einstechvorgangs, bei dem mittels des gepulsten oder kontinuierlichen Laserstrahls 5 und mit Sauerstoff als Prozessgas 7 an einer Einstichstelle 11 in das Werkstück 6 eingestochen werden soll. Der anfängliche Düsenabstand A0 der Laserbearbeitungsdüse 8 zur Werkstückoberfläche 12 entspricht einem fix vorgegebenen Sollabstand B von z.B. 5 mm.

In Fig. 2b ist zum Zeitpunkt t1 mittels des Laserstrahls 5 und des Prozessgases 7 ein Einstichloch 13 in die Werkstückoberfläche 12 eingestochen, dessen Tiefe etwa 1/3 der Werkstückdicke beträgt. Das beim Einstechen aufschmelzende Werkstückmaterial lagert sich um das Einstichloch 13 herum ab und bildet auf der Werkstückoberseite 12 einen Aufwurf 14. Während des Einstechens wird der Abstand der Laserbearbeitungsdüse 8 zum Aufwurf 14 kontinuierlich mit der Abstandssensorik 9 gemessen und mittels einer in die Maschinensteuerung 10 integrierten Regelungseinrichtung 15 auf den Sollabstand B geregelt. Durch den hochwachsenden Aufwurf 14 wird der Düsenabstand A1 der Laserbearbeitungsdüse 8 zur eigentlichen Werkstückoberfläche 12 verändert und ist um die Höhe H des Aufwurfes 14 größer als der anfängliche Düsenabstand A0 (A1>A0). Mit Veränderung des Düsenabstandes A kann es zudem, abhängig vom Einstechprozess, sinnvoll sein, die Fokuslage des Laserstrahls 5, bezogen auf die Werkstückoberfläche 12, über die Maschinensteuerung 10 bzw. die Regelungseinrichtung 15 anzupassen. Insbesondere kann die Fokuslage nach unten hin verschoben werden, um so die Fokuslage relativ zum Werkstück 6 konstant zu halten.

In Fig. 2c beträgt die Tiefe des Einstichlochs 13 zum Zeitpunkt t2 etwa 2/3 der Werkstückdicke. Die Höhe H des Aufwurfes 14 ist entsprechend weiter angewachsen und der Abstand der Laserbearbeitungsdüse 8 zum Aufwurf 14 auf den Sollabstand B geregelt. Durch den weiter hochgewachsenen Aufwurf 14 ist auch der Düsenabstand A2 der Laserbearbeitungsdüse 8 zur eigentlichen Werkstückoberfläche 12 angewachsen und um die Höhe H des Aufwurfes 14 größer als der anfängliche Düsenabstand A0 (A2>A1>A0).

Fig. 2d zeigt schließlich den Zeitpunkt t3, zu dem das Einstichloch 13 durchstochen und der Einstechvorgang beendet ist. Falls sich der Aufwurf 14, wie in Fig. 2d dargestellt, bereits von der Werkstückoberseite 12 abgelöst hat, befindet sich die Laserbearbeitungsdüse 8 wieder im Anfangsabstand A0 zur Werkstückoberfläche 12.

Alternativ oder zusätzlich zur Regelung des Abstands der Laserbearbeitungsdüse 8 zum Aufwurf 14 oder zur Anpassung der Fokuslage können auch andere Einstechparameter in Abhängigkeit von dem Düsenabstand A bzw. von der Höhe H des Aufwurfes 14 geändert werden, nämlich:
- der Fokusdurchmesser, um den Fokusdurchmesser am Werkstück 6 konstant zu halten;
- der Gasdruck des Prozessgases 7, um den Gasdruck am Werkstück 6 konstant zu halten. In den Fign. 2a bis 2c ist ein Anstieg des Gasdrucks schematisch durch unterschiedlich dicke Strömungspfeile angedeutet;
- die Leistung des Laserstrahls 5, um die Leistung am Werkstück 6 konstant zu halten;
- die Gasart des Prozessgases 7 z.B. von anfänglich Sauerstoff auf ein Inertgas. Hierfür werden während des Einstechens der Düsenabstand A und/oder die Höhe H des Aufwurfes 14 aus dem Verfahrweg der Laserbearbeitungsdüse 8 rechtwinklig zur Werkstückoberfläche 12 ermittelt.

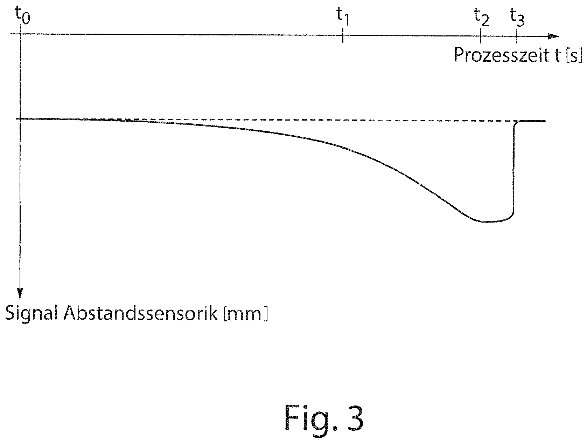

In Fig. 3 ist beispielhaft der (gefilterte) zeitliche Verlauf des sich ändernden Messwerts der kapazitiven Abstandssensorik 9 während eines Einstechvorgangs mit feststehendem Laserbearbeitungskopf 3 dargestellt. Der Messwert ändert sich aufgrund des anwachsenden Aufwurfs 14, d.h. aufgrund der Verringerung des Abstands zwischen der Aufwurfoberseite und der Laserbearbeitungsdüse 8. Der gemessene Verlauf des Sensorsignals kann z.B. mit Hilfe von in der Regelungseinrichtung 15 hinterlegten, zuvor in Testmessungen empirisch ermittelten Umrechnungskennlinien in einen Verlauf des tatsächlichen Abstands der Laserbearbeitungsdüse 8 zum Aufwurf 14 umgerechnet werden. Die so ermittelten Daten dienen als Grundlage für die Regelung des Abstands zwischen Laserbearbeitungsdüse 8 und Aufwurf 14.

## Patentansprüche

1. Verfahren zum Einstechen in ein metallisches Werkstück (6) an einer Einstichstelle (11) mittels eines Laserstrahls (5) und eines Prozessgases (7), die beide aus einer Laserbearbeitungsdüse (8) austreten, wobei beim Einstechen um die Einstichstelle (11) herum ein Aufwurf (14) auf der Werkstückoberfläche (12) abgelagert wird,
**dadurch gekennzeichnet,**
**dass** während des Einstechens der Abstand der Laserbearbeitungsdüse (8) zum Aufwurf (14) kontinuierlich gemessen wird und dass mindestens ein Einstechparameter in Abhängigkeit des gemessenen Abstands geändert wird.

2. Verfahren nach Anspruch 1, **dadurch gekennzeichnet, dass** während des Einstechens mindestens einer der folgenden Einstechparameter in Abhängigkeit von dem gemessenen Abstand geändert wird: Abstand (A) der Laserbearbeitungsdüse (8) zur Werkstückoberfläche (12), Abstand der Laserbearbeitungsdüse (8) zum Aufwurf (14), Fokuslage des Laserstrahls (5) zum Werkstück (6), Fokusdurchmesser des Laserstrahls (5), Leistung des Laserstrahls (5), Gasdruck des aus der Laserbearbeitungsdüse (8) austretenden Prozessgases (7) und Gasart des aus der Laserbearbeitungsdüse (8) austretenden Prozessgases (7).

3. Verfahren nach Anspruch 1 oder 2, **dadurch gekennzeichnet, dass** durch Ändern des Abstands (A) der Laserbearbeitungsdüse (8) zur Werkstückoberfläche (12) der Abstand der Laserbearbeitungsdüse (8) zum Aufwurf (14) auf einen vorgegebenen Sollabstand (B) geregelt wird.

4. Verfahren nach Anspruch 3, **dadurch gekennzeichnet, dass** der Sollabstand (B) konstant ist oder sich während des Einstechens ändert, insbesondere verringert.

5. Verfahren nach einem der vorhergehenden Ansprüche, **dadurch gekennzeichnet, dass** während des Einstechens der von der Laserbearbeitungsdüse (8) rechtwinklig zur Werkstückoberfläche (12) zurückgelegte Verfahrweg ermittelt wird und der Abstand (A) der Laserbearbeitungsdüse (8) zur Werkstückoberfläche (12) aus dem anfänglichen Abstand (A₀) der Laserbearbeitungsdüse (8) zur Werkstückoberfläche (12) und dem ermittelten Verfahrweg der Laserbearbeitungsdüse (8) und/oder die Höhe (H) des Aufwurfes (14) aus dem ermittelten Verfahrweg der Laserbearbeitungsdüse (8) ermittelt werden.

6. Laserbearbeitungsmaschine (1) umfassend einen Laserstrahlerzeuger (2) zum Erzeugen eines Laserstrahls (5), einen bewegbaren Laserbearbeitungskopf (3) mit einer Laserbearbeitungsdüse (8), aus der der Laserstrahl (5) zusammen mit einem Prozessgas (7) austritt, eine Abstandssensorik (9) zum Messen des Abstands der Laserbearbeitungsdüse (8) zu einem Werkstück (6), eine Maschinensteuerung (10) zum Bewegen des Laserbearbeitungskopfes (3), **gekennzeichnet durch** eine Regelungseinrichtung (15), die programmiert ist, während des Einstechens in ein metallisches Werkstück (6) mittels des Laserstrahls (5) mindestens einen Einstechparameter in Abhängigkeit des gemessenen Abstands der Laserbearbeitungsdüse (8) zu einem Aufwurf (14), welcher beim Einstechen um eine Einstichstelle (11) herum auf der Werkstückoberfläche (12) abgelagert wird, zu ändern.

7. Laserbearbeitungsmaschine nach Anspruch 6, **dadurch gekennzeichnet, dass** die Regelungseinrichtung (15) programmiert ist, den Abstand der Laserbearbeitungsdüse (8) zu dem Aufwurf (14) durch Änderung des Abstands der Laserbearbeitungsdüse (8) zur Werkstückoberfläche (12) auf einen vorgegebenen Sollabstand (B) zu regeln.

8. Computerprogrammprodukt, welches Codemittel aufweist, die zum Durchführen aller Schritte des Verfahrens nach einem der Ansprüche 1 bis 5 angepasst sind, wenn das Programm auf einer Steuerung (10, 15) einer Laserbearbeitungsmaschine (1) abläuft.

## Claims

1. A method for piercing a metal workpiece (6) at a piercing point (11) by means of a laser beam (5) and a process gas (7), which both exit from a laser processing nozzle (8), a bulge (14) being deposited on the workpiece surface (12) around the piercing point (11) during the piercing,
**characterized in**
**that** the distance of the laser processing nozzle (8) from the bulge (14) is measured continuously during the piercing and that at least one piercing parameter is changed in dependence on the distance measured.

2. The method as claimed in claim 1, **characterized in that** during the piercing at least one of the following piercing parameters is changed in dependence on the distance measured: distance (A) of the laser processing nozzle (8) from the workpiece surface (12), distance of the laser processing nozzle (8) from the bulge (14), focus position of the laser beam (5) with respect to the workpiece (6), focus diameter of the laser beam (5), power of the laser beam (5), gas pressure of the process gas (7) exiting from the laser processing nozzle (8), and type of gas of the process gas (7) exiting from the laser processing nozzle (8).

3. The method as claimed in claim 1 or 2, **characterized in that**, by changing the distance (A) of the laser machine nozzle (8) from the workpiece surface (12), the distance of the laser processing nozzle (8) from the bulge (14) is controlled to a predetermined setpoint distance (B).

4. The method as claimed in claim 3, **characterized in that** the setpoint distance (B) is constant or changes during the piercing, in particular is reduced.

5. The method as claimed in one of the preceding claims, **characterized in that** during the piercing the travelling distance by which the laser processing nozzle (8) moves at right angles to the workpiece surface (12) is determined and the distance (A) of the laser processing nozzle (8) from the workpiece surface (12) is determined from the initial distance (A₀) of the laser processing nozzle (8) from the workpiece surface (12) and the determined travelling distance of the laser processing nozzle (8) and/or the height (H) of the bulge (14) is determined from the determined travelling distance of the laser processing nozzle (8).

6. A laser processing machine (1) comprising a laser beam generator (2) for generating a laser beam (5), a movable laser processing head (3) with a laser processing nozzle (8), from which the laser beam (5) exits together with a process gas (7), a distance sensor system (9) for measuring the distance of the laser processing nozzle (8) from a workpiece (6), a machine controller (10) for moving the laser processing head (3),
**characterized by** a control device (15), which is programmed to change during the piercing of a metal workpiece (6) by means of the laser beam (5) at least one piercing parameter in dependence on the measured distance of the laser processing nozzle (8) from a bulge (14) that is deposited on the workpiece surface (12) around a piercing point (11) during the piercing.

7. The laser processing machine as claimed in claim 6, **characterized in that** the control device (15) is programmed to control the distance of the laser processing nozzle (8) from the bulge (14) to a predetermined setpoint distance (B) by changing the distance of the laser processing nozzle (8) from the workpiece surface (12).

8. A computer program product, which has code means that are adapted for carrying out all of the steps of the method as claimed in one of claims 1 to 5 when the program runs on a controller (10, 15) of a laser processing machine (1).

## Revendications

1. Procédé pour réaliser une piqûre ou un saignage dans une pièce métallique (6) à un point de piqûre (11) au moyen d'un faisceau laser (5) et d'un gaz de processus (7) qui sortent tous deux d'une buse d'usinage par laser (8), une bavure (14) étant déposée sur la surface de pièce (12) autour du point de piqûre (11) lors de la piqûre,
**caractérisé en ce**
**que**, pendant la piqûre, la distance entre la buse d'usinage par laser (8) et la bavure (14) est mesurée en continu et qu'au moins un paramètre de piqûre est modifié en fonction de la distance mesurée.

2. Procédé selon la revendication 1, **caractérisé en ce que**, pendant la piqûre, au moins un des paramètres de piqûre suivants est modifié en fonction de la distance mesurée : distance (A) entre la buse d'usinage par laser (8) et la surface de pièce (12), distance entre la buse d'usinage par laser (8) et la bavure (14), position focale du faisceau laser (5) par rapport à la pièce (6), diamètre focal du faisceau laser (5), puissance du faisceau laser (5), pression de gaz du gaz de processus (7) sortant de la buse d'usinage par laser (8) et type de gaz du gaz de processus (7) sortant de la buse d'usinage par laser (8).

3. Procédé selon la revendication 1 ou 2, **caractérisé en ce que** la distance entre la buse d'usinage par laser (8) et la bavure (14) est régulée à une distance de consigne prédéfinie (B) en faisant varier la distance (A) entre la buse d'usinage par laser (8) et la surface de pièce (12).

4. Procédé selon la revendication 3, **caractérisé en ce que** la distance de consigne (B) est constante ou varie, en particulier diminue, pendant la piqûre.

5. Procédé selon l'une des revendications précédentes, **caractérisé en ce que**, pendant la piqûre, la course parcourue par la buse d'usinage par laser (8) perpendiculairement à la surface de pièce (12) est déterminée et la distance (A) entre la buse d'usinage par laser (8) et la surface de pièce (12) est déterminée à partir de la distance initiale (A₀) entre la buse d'usinage par laser (8) et la surface de pièce (12) et de la course déterminée de la buse d'usinage par laser (8) et/ou la hauteur (H) de la bavure (14) est déterminée à partir de la course déterminée de la buse d'usinage par laser (8).

6. Machine d'usinage par laser (1) comprenant un générateur de faisceau laser (2) pour générer un faisceau laser (5), une tête d'usinage par laser mobile (3) avec une buse d'usinage par laser (8) dont sort le faisceau laser (5) en même temps qu'un gaz de processus (7), un système de capteur de distance (9) pour mesurer la distance entre la buse d'usinage par laser (8) et une pièce (6), une commande de machine (10) pour déplacer la tête d'usinage par laser (3),
**caractérisée par** un dispositif de régulation (15) qui est programmé pour, pendant la piqûre dans une pièce métallique (6) au moyen du faisceau laser (5), modifier au moins un paramètre de piqûre en fonction de la distance mesurée entre la buse d'usinage par laser (8) et une bavure (14) qui est déposée sur la surface de pièce (12) autour d'un point de piqûre (11) lors de la piqûre.

7. Machine d'usinage par laser selon la revendication 6, **caractérisée en ce que** le dispositif de régulation (15) est programmé pour réguler la distance entre la buse d'usinage par laser (8) et la bavure (14) à une distance de consigne prédéfinie (B) en faisant varier la distance entre la buse d'usinage par laser (8) et la surface de pièce (12).

8. Produit programme d'ordinateur présentant des moyens de code adaptés à exécuter toutes les étapes du procédé selon l'une des revendications 1 à 5 lorsque le programme est exécuté sur une commande (10, 15) d'une machine d'usinage par laser (1).
